# EUROPÄISCHE PATENTSCHRIFT

(11) **EP 4 033 782 B1**
(45) Veröffentlichungstag und Bekanntmachung des Hinweises auf die Patenterteilung: **28.01.2026**
(21) Anmeldenummer: 21212917.5
(22) Anmeldetag: 07.12.2021
(51) Int. Cl.: H04R 25/00, H04L 27/20

(54) **HÖRGERÄT**
HEARING AID
APPAREIL AUDITIF

(30) Priorität: 25.01.2021 DE 102021200642
(43) Veröffentlichungstag der Anmeldung: 27.07.2022
(73) Patentinhaber: Sivantos Pte. Ltd., Singapore 539775 (SG)
(72) Erfinder: BRENDEL, Johannes, 91056 Erlangen (DE); PFANNENMÜLLER, Gerhard, 90763 Fürth (DE); SCHAETZLE, Ulrich, 91052 Erlangen (DE)
(74) Vertreter: FDST Patentanwälte

(56) Entgegenhaltungen:
- WO-A1-2007/030864
- DE-T2- 69 534 704
- US-A- 4 681 111
- US-A- 5 276 910

## Beschreibung

Die Erfindung betrifft ein Hörgerät, insbesondere Hörhilfevorrichtung, aufweisend eine Transmitterschaltung zur drahtlosen Signalübertragung. Die Erfindung betrifft weiterhin ein Verfahren zum Betreiben eines solchen Hörgeräts.

Hörhilfevorrichtungen sind tragbare Hörgeräte (Hörinstrument), die zur Versorgung von Schwer-hörenden oder Hörgeschädigten dienen. Um den zahlreichen individuellen Bedürfnissen entgegenzukommen, werden unterschiedliche Bauformen von Hörhilfevorrichtungen wie Hinter-dem-Ohr-Hörgeräte (HdO) und Hörgeräte mit einem externen Hörer (RIC: receiver in the canal) sowie In-dem-Ohr-Hörgeräte (IdO), zum Beispiel auch Concha-Hörgeräte oder Kanal-Hörgeräte (ITE: In-The-Ear, CIC: Completely-In-Channel, IIC: Invisible-In-The-Channel), bereitgestellt. Die beispielhaft aufgeführten Hörgeräte werden am Außenohr oder im Gehörgang eines Hörhilfevorrichtungsnutzers getragen. Darüber hinaus stehen auf dem Markt aber auch Knochenleitungshörhilfen, implantierbare oder vibrotaktile Hörhilfen zur Verfügung. Dabei erfolgt die Stimulation des geschädigten Gehörs entweder mechanisch oder elektrisch.

Derartige Hörgeräte besitzen prinzipiell als wesentliche Komponenten einen Eingangswandler, einen Verstärker und einen Ausgangswandler. Der Eingangswandler ist in der Regel ein akusto-elektrischer Wandler, wie beispielsweise ein Mikrofon, und/oder ein elektromagnetischer Empfänger, zum Beispiel eine Induktionsspule oder eine (Radiofrequenz-, RF-)Antenne. Der Ausgangswandler ist meist als ein elektro-akustischer Wandler, zum Beispiel als ein Miniaturlautsprecher (Hörer), oder als ein elektromechanischer Wandler, wie beispielsweise ein Knochenleitungshörer, realisiert. Der Verstärker ist üblicherweise in eine Signalverarbeitungseinrichtung integriert. Die Energieversorgung erfolgt üblicherweise durch eine Batterie oder einen aufladbaren Akkumulator.

Bei einer sogenannten binauralen Hörhilfevorrichtung werden zwei derartige Hörgeräte von einem Benutzer getragen, wobei zwischen den Hörgeräten eine Kommunikations- oder Signalverbindung besteht, welche auch als Ohr-zu-Ohr oder Ear-to-Ear (e2e) Kommunikation bezeichnet ist. Im Betrieb werden hierbei beispielsweise drahtlos Daten, gegebenenfalls auch große Datenmengen, und/oder Audiosignale zwischen dem Hörgerät am rechten und linken Ohr ausgetauscht. Die ausgetauschten Daten und Informationen ermöglichen eine besonders effektive Anpassung der Hörgeräte an eine jeweilige akustische Umgebungssituation. Insbesondere wird hierdurch ein besonders authentischer Raumklang für den Benutzer ermöglicht, sowie das Sprachverständnis, auch in lauten Umgebungen, verbessert. Des Weiteren werden beispielsweise Features und Funktionalitäten wie Narrow Focus oder CROS (Contralateral Routing Of Signal) ermöglicht.

Aufgrund der begrenzten Energiequellen in einem Hörgerät ist es notwendig, dass die e2e-Signalübertragung möglichst stromsparend ausgeführt ist, damit eine Batterielebensdauer von mehreren Tagen bei aktiver e2e-Kommunikation ermöglicht wird. Typischerweise werden e2e-Kommunikationssysteme hierbei als magnetisch-induktive Verbindung realisiert, welche aus einem analogen und digitalen Sender, zwei Spulen als Sende- und Empfangsantenne und einem analogen und digitalen Empfänger besteht. Eine Sender- oder Transmitterschaltung des Kommunikationssystems ist hierbei kritisch hinsichtlich des Batterieverbrauchs.

Im Zuge der Signalübertragung wird ein zu übertragendes Nutzsignal regelmäßig mit einem sogenannten Träger verändert (moduliert), so dass eine hochfrequente Übertragung eines niederfrequenten Nutzsignals ermöglicht ist. Das Nutzsignal beziehungsweise die Daten und Informationen werden empfangsseitig durch eine entsprechende Demodulation zurückgewonnen. Als Modulationsformat wird bei binauralen Hörgeräten aus Energiespargründen in der Regel eine konstante Hüllkurven-Phasenmodulationstechnik verwendet. Andere Sendertopologien, wie z.B. IQ-Modulatoren, sind aufgrund des hohen Stromverbrauchs nicht für Low-Power-Hörgeräte geeignet.

Die US 5 276 910 zeigt ein Hörgerät mit einer H-Brückenschaltung zum Ansteuern einer Loop-Antenne.

Die Herausforderung beim Design besteht darin, einen stromsparenden Sender oder Transmitter zu bauen, welcher ein konstant hüllkurvenphasenmoduliertes Signal erzeugt. Aufgrund des begrenzten Bauraumes im Hörgerät ist es notwendig, dass der Transmitter möglichst kompakt und in einen kundenspezifischen ASIC integrierbar ausgeführt ist. Insbesondere sollen möglichst wenig externe Komponenten verwendet werden. Darüber hinaus muss das erzeugte Sendesignal regulatorische Vorschriften (z. B. spektrale Masken) einhalten.

Ein solcher Transmitter oder Transmitterschaltkreis weist beispielsweise einen Schwingkreis und eine Energieeinspeiseschaltung (Energieeinspeisekreis) auf. Die verschiedenen Phasen des Transmitters (TX) werden realisiert, indem die Sendefrequenz durch eine Verstimmung des Schwingkreises für eine bestimmte Zeitdauer variiert wird, bis eine gewünschte Phase erreicht ist. Hierbei werden mindestens drei verschiedene Frequenzen verwendet, zum einen die nominale Sendefrequenz (f0), und zum anderen eine Frequenz unterhalb der Sendefrequenz (fm), welche für eine negative Phasenverschiebungen verwendet wird, sowie eine Frequenz oberhalb der Sendefrequenz (fp), welche für positive Phasenverschiebungen verwendet wird. Das Sendesignal ist ein kontinuierliches Signal mit konstanter Hüllkurve.

Die Energieeinspeiseschaltung ist beispielsweise als eine H-Brückenschaltung ausgeführt. Der Energieeinspeisekreis kompensiert Verluste und speist zu einem exakten Zeitpunkt Energie in den Schwingkreis ein, um die Schwingung mit konstanter Amplitude und der gewünschten Frequenz aufrecht zu erhalten. Der (Einspeise-)Zeitpunkt erfolgt hierbei synchronisiert zur Schwingung.

Der Erfindung liegt die Aufgabe zugrunde, ein besonders geeignetes Hörgerät anzugeben. Insbesondere soll eine besonders energiesparende und bauraumkompakte e2e-Kommunikation realisiert werden. Der Erfindung liegt weiterhin die Aufgabe zugrunde, ein besonders geeignetes Verfahren zum Betrieb eines solchen Hörgeräts anzugeben.

Hinsichtlich des Hörgeräts wird die Aufgabe mit den Merkmalen des Anspruchs 1 und hinsichtlich des Verfahrens mit den Merkmalen des Anspruchs 4 erfindungsgemäß gelöst. Vorteilhafte Ausgestaltungen und Weiterbildungen sind Gegenstand der Unteransprüche. Die im Hinblick auf das Hörgerät angeführten Vorteile und Ausgestaltungen sind sinngemäß auch auf das Verfahren übertragbar und umgekehrt.

Das Hörgerät ist insbesondere als eine Hörvorrichtung ausgebildet, und dient vorzugsweise der Versorgung eines hörgeschädigten Nutzers (Hörgerätenutzer). Das Hörgerät ist hierbei ausgebildet, Schallsignale aus der Umgebung aufzunehmen und an einen Nutzer des Hörgeräts auszugeben. Hierzu weist das Hörgerät zumindest einen akusto-elektrischen Eingangswandler, insbesondere ein Mikrofon, auf sowie zumindest einen elektro-akustischen Ausgangswandler, beispielsweise einen Hörer. Der Eingangswandler nimmt im Betrieb des Hörgeräts Schallsignale (Geräusche, Töne, Sprache, etc.) aus der Umgebung auf, und wandelt diese in ein elektrisches Eingangssignal (Akustikdaten) um. Aus dem elektrischen Eingangssignal wird ein elektrisches Ausgangssignal erzeugt, indem das Eingangssignal in einer Signalverarbeitung modifiziert wird. Die Signalverarbeitung ist beispielsweise ein Teil des Hörgeräts. Der Eingangswandler und der Ausgangswandler sowie gegebenenfalls auch die Signalverarbeitung sind insbesondere in einem Gehäuse des Hörgeräts untergebracht. Das Gehäuse ist derart ausgebildet, dass dieses vom Nutzer am Kopf und in der Nähe des Ohrs getragen werden kann, z.B. im Ohr, am Ohr oder hinter dem Ohr. Vorzugsweise ist das Hörgerät als BTE-Hörgerät, ITO-Hörgerät oder RIC-Hörgerät ausgebildet.

Das Hörgerät weist einen Transmitter oder Sender mit einer Transmitterschaltung zur drahtlosen Signalübertragung, insbesondere für eine e2e-Kommunikation auf. Die Transmitterschaltung weist einen elektrischen Schwingkreis mit zwei steuerbaren Halbleiterschaltern und mit zwei Kondensatoren sowie mit einer Transmitter- oder Sendespule auf. Erfindungsgemäß sind die Halbleiterschalter von einem Pulsphasenmodulator angesteuert. Mit anderen Worten ist die erfindungsgemäße Transmitterschaltung für eine Pulsphasenmodulation einer Hüllkurve eines Sendesignals vorgesehen, sowie dafür geeignet und eingerichtet. Dadurch ist ein besonders geeignetes Hörgerät realisiert.

In einer geeigneten Weiterbildung weist der Schwingkreis zwei Kondensatoren und zwei steuerbare Halbleiterschalter auf, wobei jeweils ein Halbleiterschalter einem Kondensator zugeordnet ist, und wobei die Transmitterspule zwischen den Kondensatoren verschaltet ist. Dadurch ist die Transmitterspule symmetrisch über die Kondensatoren und Halbleiterschalter ansteuerbar.

In einer erfindungsgemäßen Ausführung ist eine Ausgangsseite einer Brückenschaltung an die Transmitterspule angeschlossen. Mit anderen Worten ist die Transmitterspule zwischen zwei Brückenzweigen verschaltet. Die Brückenschaltung wirkt hierbei als ein Einspeiseschaltkreis, welcher zur Einspeisung von Verlustenergie (aufgrund von parasitären Verlusten oder abgestrahlter Leistung) in den Schwingkreis vorgesehen ist, um eine konstante Amplitude im Schwingkreis beziehungsweise des Sendesignals zu gewährleisten. Die Brückenschaltung ist vorzugsweise als eine H-Brückenschaltung ausgeführt.

In einer zweckmäßigen Ausgestaltung sind der Pulsphasenmodulator und die Brückenschaltung anhand eines gemeinsamen Zeitgebers gesteuert. Mit anderen Worten sind die Betriebszustände der Brückenschaltung und des Pulsphasenmodulators von einem gemeinsamen Zeitgeber oder Taktgeber abgeleitet. Dadurch ist es möglich, den Pulsphasenmodulator und die Brückenschaltung geeignet zu schalten, während der Schwingkreis bei einer gewünschten Sendefrequenz in Resonanz arbeitet, und ohne, dass eine Stellspannung im Kondensator oder ein Strom in der Transmitterspule überwacht wird.

Ein zusätzlicher oder weiterer Aspekt der Erfindung sieht vor, dass das Hörgerät binaural ausgebildet ist und hierzu zwei Einzelgeräte aufweist, welche jeweils zumindest ein Eingangswandler sowie zumindest einen Ausgangswandler aufweisen und dadurch ausgebildet sind, Schallsignale aus der Umgebung aufzunehmen und an einen Nutzer des Hörgeräts auszugeben. Zusätzlich weist jedes der Einzelgeräte eine Transmitterschaltung als eine Drahtlosschnittstelle zum Datenaustausch zwischen den beiden Einzelgeräten auf. Die Einzelgeräte sind hierbei über die Transmitterschaltungen signaltechnisch miteinander gekoppelt oder zumindest koppelbar.

Bei einem binauralen Hörgerät werden die beiden Einzelgeräte vom Nutzer auf unterschiedlichen Seiten des Kopfs getragen, sodass jedes Einzelgerät einem Ohr zugeordnet ist. Alternativ zu einem binauralen Hörgerät ist aber auch ein monaurales Hörgerät mit lediglich einem Einzelgerät geeignet. Die Ausführungen bezüglich eines monauralen Hörgeräts sind sinngemäß auf ein binaurales Hörgerät übertragbar und umgekehrt.

Das erfindungsgemäße Verfahren ist zum Betrieb eines vorstehend beschriebenen Hörgeräts vorgesehen, sowie dafür geeignet und ausgestaltet. Zur drahtlosen Signalübertragung wird ein Sendesignal (TX-Signal) von der Transmitterschaltung erzeugt, wobei verfahrensgemäß zu einem ersten Zeitpunkt die Transmitterspule von jedem Kondensator getrennt wird, und wobei die Transmitterspule zu einem späteren zweiten Zeitpunkt mit jedem Kondensator wieder verbunden wird, wenn eine gewünschte Phasenlage des Schwingkreises erreicht ist. Mit anderen Worten wird der Schwingkreis verfahrensgemäß zu dem ersten Zeitpunkt angehalten oder gestoppt und zu dem zweiten Zeitpunkt wieder gestartet, so dass ein Phasenversatz des resultierenden Sendesignals bewirkt wird. Dadurch ist es möglich, die Transmitterschaltung zwischen verschiedenen Phasen (TX-Phasen) umzuschalten.

Das erfindungsgemäße Transmitterkonzept moduliert somit die Phase des Sendesignals indem der Schwingkreis für eine Zeitdauer pausiert wird. Das Verfahren hat den Vorteil, dass eine gewünschte Phase nahezu unmittelbar, mindestens aber innerhalb eines Sendezyklus erreicht wird. Im Gegensatz hierzu benötigt eine Phasenverschiebung durch Frequenzverstimmung des Schwingkreises gemäß dem Stand der Technik je nach gewünschtem Phasenschritt und den Frequenzen (fm, fp) mehrere Sendezyklen, bis eine gewünschte TX-Phase erreicht ist.

Des Weiteren ist somit ein besonders kostengünstiger Pulsphasenmodulator mit einer reduzierten Komplexität ermöglicht, da lediglich eine Frequenz - die nominale Sendefrequenz (f0) - übertragen oder gesendet wird. Weitere Sendefrequenzen (fm, fp) sind erfindungsgemäß nicht mehr erforderlich, wodurch die Transmitterschaltung vereinfacht wird. Des Weiteren entfällt eine Notwendigkeit eines Trimmens dieser Frequenzen.

Sofern nachfolgend Verfahrensschritte beschrieben werden, ergeben sich vorteilhafte Ausgestaltungen für das Hörgerät insbesondere dadurch, dass dieses ausgebildet ist, einen oder mehrere dieser Verfahrensschritte auszuführen. Insbesondere weist das Hörgerät vorzugsweise einen Controller (das heißt eine Steuereinheit) auf, welcher mit der Transmitterschaltung gekoppelt ist. Der Controller kann hierbei beispielsweise Teil einer Signalverarbeitungseinrichtung des Hörgeräts sein.

Der Controller ist hierbei allgemein - programm- und/oder schaltungstechnisch - zur Durchführung des vorstehend beschriebenen erfindungsgemäßen Verfahrens eingerichtet. Der Controller ist somit konkret dazu eingerichtet, den Pulsphasenmodulator und/oder die Halbleiterschalter sowie gegebenenfalls die Brückenschaltung anzusteuern.

In einer bevorzugten Ausgestaltungsform ist der Controller zumindest im Kern durch einen Mikrocontroller mit einem Prozessor und einem Datenspeicher gebildet, in dem die Funktionalität zur Durchführung des erfindungsgemäßen Verfahrens in Form einer Betriebssoftware (Firmware) programmtechnisch implementiert ist, so dass das Verfahren - gegebenenfalls in Interaktion mit einem Vorrichtungsnutzer - bei Ausführung der Betriebssoftware in dem Mikrocontroller automatisch durchgeführt wird. Der Controller kann im Rahmen der Erfindung alternativ aber auch durch ein nicht-programmierbares elektronisches Bauteil, wie zum Beispiel einem anwendungsspezifischen integrierten Schaltkreis (ASIC), gebildet sein, in dem die Funktionalität zur Durchführung des erfindungsgemäßen Verfahrens mit schaltungstechnischen Mitteln implementiert ist.

In einer vorteilhaften Weiterbildung wird die Transmitterspule von jedem Kondensator getrennt, wenn der oder jeder Kondensator im Wesentlichen vollständig aufgeladen ist. Für einen guten Leistungswirkungsgrad wird der Schwingkreis insbesondere angehalten, wenn der Strom in der Transmitterspule Null ist, und die Ladung im Kondensator ein positives Maximum erreicht hat, indem die Transmitterspule vom Kondensator getrennt wird.

Aufgrund von Asymmetrien in der Transmitterschaltung oder einem verstimmten Schwingkreis können Spannungsspitzen oder ungewünschte Artefakte im Sendesignal auftreten. Zur Vermeidung oder Unterdrückung solcher ungewünschten Effekte ist es in einer zweckmäßigen Ausführung vorgesehen, dass die Transmitterspule kurzgeschlossen wird, wenn die Transmitterspule von dem oder jedem Kondensator getrennt wird. Dadurch wird die verbleibende Energie in der Transmitterspule kurzgeschlossen.

Mit dem erfindungsgemäßen Verfahren wird kein kontinuierliches Sendesignal erzeugt, da der Schwingkreis bei Phasenverschiebungen angehalten wird. Dies führt zu Signalemissionen auch außerhalb eines Nutzfrequenzbandes, welche typischerweise höher sind, als bei einem kontinuierlichen Betrieb. Um diese unerwünschten Emissionen zu reduzieren, ist es in einer bevorzugten Ausbildung des Verfahrens vorgesehen, dass der oder jeder Halbleiterschalter mit einem Steuersignal des Pulsphasenmodulators angesteuert wird, wobei das Steuersignal ein Dither-Rauschen aufweist. Mit anderen Worten ist ein Dithering (Zittern) für die Ansteuerung der Halbleiterschalter vorgesehen.

Beispielsweise werden die Halbleiterschalter geöffnet, wenn der zugeordnete Kondensator ein positives oder negatives Spannungsmaximum erreicht. Dadurch sind während eines sinusförmigen Sendesignals (Sinuswelle) bei 0° und 180° zwei Schaltvorgänge realisiert. Für den Neustart ist es für eine gegebene TX-Phase daher beispielsweise möglich, den zweiten Zeitpunkt derart zu wählen, dass die TX-Phase mit einer positiven Halbwelle startet, oder dass die TX-Phase diesbezüglich eine Halbwelle früher startet, also mit einer 180° früheren negativen Halbwelle, oder dass die TX-Phase diesbezüglich eine Halbwelle später startet, also mit einer 180° späteren negativen Halbwelle. Der Schaltzeitpunkt der Halbleiterschalter wird hierbei vorzugsweise zufällig zwischen diesen Zeitpunkten gewechselt (Dithering). Dies hat den Vorteil, dass unerwünschte Übertragungen deutlich reduziert und die Länge der übertragenen TX-Phase entzerrt wird.

Der Pulsphasenmodulator erzeugt im Betrieb im erzeugten Sendesignal Nebenkeulen (Sidelobes) erster Ordnung bei f0 ± 1,5 fs, wobei f0 die Trägerfrequenz und fs die Modulationssymbolrate ist. Wenn die Symbolrate sehr hoch gewählt wird, um die Datenrate der Funkstrecke zu erhöhen, kann es vorkommen, dass die Nebenkeulen nicht mehr innerhalb der zulässigen gesetzlichen Bandbreitengrenzen liegen, wodurch diese auf einen Nebenkeulenpegel gedämpft werden müssen, welcher durch eine Emissionsmaske vorgegeben ist.

Für die drahtlose Signalübertragung bei einem Hörgerät ist eine möglichst einfache Reduzierung der Nebenkeulen gewünscht, um den Verarbeitungsaufwand und damit die Leistungsaufnahme so gering wie möglich zu halten. In einer bevorzugten Ausgestaltung des Verfahrens ist es vorgesehen, dass die Symbolrate des Sendesignals zwischen mindestens zwei Symbolratewerten umgeschaltet wird. Mit anderen Worten ist die Symbolrate ist nicht konstant, sondern wechselt zwischen zwei oder mehr Symbolraten hin und her. Das Sendesignal ergibt sich somit aus einer Überlagerung aus den verschiedenen Symbolraten, wodurch die Nebenkeulen unterdrückt werden. Die Umschalt- oder Wechselfolge zwischen den Symbolraten ist hierbei für die Signalübertragung oder e2e-Kommunikation sowohl auf der Sender- als auch auf der Empfängerseite hinterlegt.

Nachfolgend sind Ausführungsbeispiele der Erfindung anhand einer Zeichnung näher erläutert. Darin zeigen:
- Fig. 1: in schematischer Darstellung ein binaurales Hörgerät,
- Fig. 2: in einem Blockschaltbild einen vereinfachten Schwingkreis einer Transmitterschaltung,
- Fig. 3: in einem Blockschaltbild ausschnittsweise die Transmitterschaltung,
- Fig. 4: in einem Zeit-Spulenstrom-Diagramm und fünf Schaltpuls-Diagrammen eine Pulsphasenmodulation eines Sendesignals der Transmitterschaltung,
- Fig. 5: in zwei Zeit-Spulenstrom-Diagrammen ein Schalt-Dithering,
- Fig. 6: in einem Frequenz-Amplituden-Diagramm ein Spektrum des Sendesignals,
- Fig. 7: in einem Frequenz-Amplituden-Diagramm ein Spektrum für zwei unterschiedliche Symbolraten, und
- Fig. 8: in einem Frequenz-Amplituden-Diagramm ein Spektrum des sich aus den zwei überlagerten Symbolraten ergebenden Sendesignals.

Einander entsprechende Teile und Größen sind in allen Figuren stets mit den gleichen Bezugszeichen versehen.

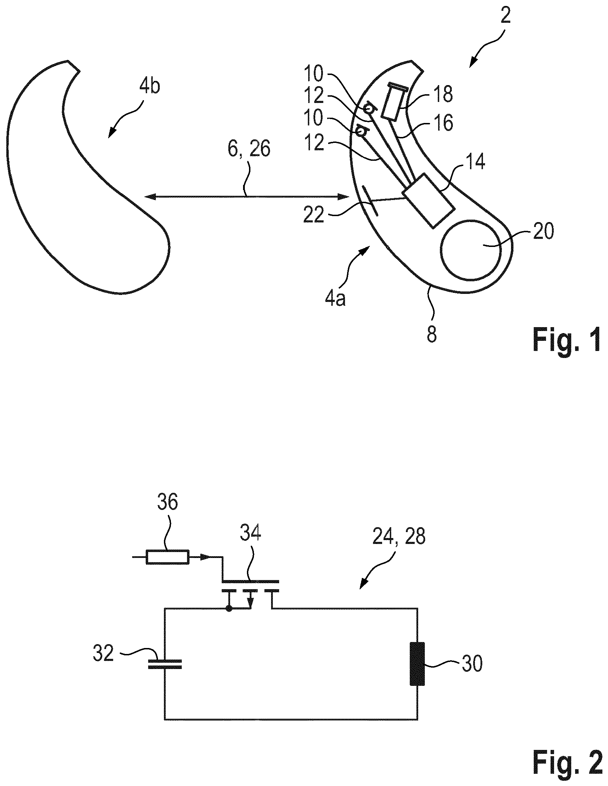

Die Fig. 1 zeigt den prinzipiellen Aufbau eines erfindungsgemäßen Hörgeräts 2. In diesem Ausführungsbeispiel ist das Hörgerät 2 als eine binaurale Hörhilfevorrichtung mit zwei signaltechnisch gekoppelten Hörhilfegeräten beziehungsweise Einzelgeräten 4a, 4b ausgeführt. Die Einzelgeräte 4a, 4b sind hierbei beispielhaft als Hinter-dem-Ohr-Hörhilfegeräte (HdO) ausgestaltet. Die Einzelgeräte 4a, 4b sind untereinander mittels einer drahtlosen Signalverbindung oder e2e-Kommunikation 6 signaltechnisch gekoppelt oder koppelbar.

Der Aufbau der Einzelgeräte 4a, 4b ist nachfolgend beispielhaft anhand des Einzelgeräts 4a erläutert. Das Einzelgerät 4a umfasst, wie in der Fig. 1 schematisch dargestellt, ein Gerätegehäuse 8, in welches ein oder mehrere Mikrofone, auch als akusto-elektrische Eingangswandler 10 bezeichnet, eingebaut sind. Mit den Eingangswandlern 10 wird ein Schall beziehungsweise die akustischen Signale in einer Umgebung des Hörgeräts 2 aufgenommen und in ein elektrisches Audiosignal oder Akustikdaten gewandelt.

Die Akustikdaten werden über Leitungen 12 an eine Signalverarbeitungseinrichtung 14 gesendet, welche ebenfalls in dem Gerätegehäuse 10 angeordnet ist, und welche die Akustikdaten verarbeitet. Anhand des Audiosignals erzeugt die Signalverarbeitungseinrichtung 14 ein Ausgangssignal, welches über eine Leitung 16 an einen Lautsprecher beziehungsweise Hörer 18 geleitet wird. Der Hörer 18 ist hierbei als ein elektro-akustischer Ausgangswandler ausgeführt, welcher das elektrische Ausgangssignal in ein akustisches Signal wandelt. Bei dem HdO-Einzelgerät 4a wird das akustische Signal gegebenenfalls über einen nicht näher dargestellten Schallschlauch oder externen Hörer, der mit einer im Gehörgang einsitzenden Otoplastik, zum Trommelfell eines Hörgerätenutzers übertragen. Es ist aber auch beispielsweise ein elektro-mechanischer Ausgangswandler als Hörer 18 denkbar, wie beispielsweise bei einem Knochenleitungshörer.

Die Energieversorgung des Einzelgeräts 4a und insbesondere der Signalverarbeitungseinrichtung 14 erfolgt mittels einer in dem Gerätegehäuse 8 aufgenommenen Batterie 20.

Die Signalverbindung 6 ist beispielsweise als eine magnetisch-induktive Kopplung zwischen den Einzelgeräten 4a und 4b ausgeführt. Hierzu ist die Signalverarbeitungseinrichtung 14 signaltechnisch an einen Transmitter 22 geführt. Der Transmitter 22 dient zum Senden von drahtlosen Signalen mittels der Signalverbindung 6.

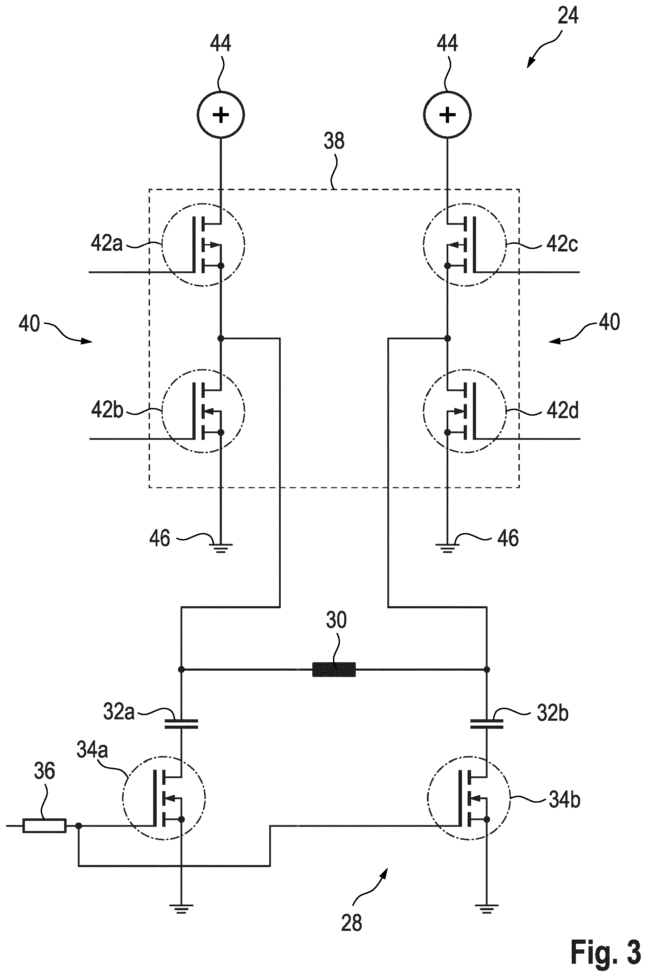

Der Transmitter 22 weist eine nachfolgend anhand der Figuren 2 und 3 näher erläuterte Transmitterschaltung 24 zur Erzeugung eines über die Signalverbindung 6 übermittelten Sendesignals 26 auf.

In der Fig. 2 ist eine schematisch vereinfachte Darstellung eines elektrischen Schwingkreises 28 der Transmitterschaltung 24 gezeigt. Der Schwingkreis 28 ist insbesondere als ein Parallel-Schwingkreis (parallel resonant circuit) ausgeführt, und weist hierbei eine Sende- oder Übertragungsspule 30 und einen Kondensator 32 sowie einen als Transistor, insbesondere als ein MOSFET (Metall-Oxid-Halbleiter-Feldeffekttransistor), ausgeführten Halbleiterschalter 34. Der Halbleiterschalter 34 ist hierbei von einem Pulsphasenmodulator 36 angesteuert.

In Fig. 3 ist die Transmitterschaltung 24 gezeigt. Der Schwingkreis 28 weist hierbei zwei Kondensatoren 32a, 32b und zwei Halbleiterschalter 34a, 34b auf. Die Anschlüsse der Transmitterspule 30 sind hierbei über jeweils einen Kondensator 32a, 32b kontaktiert, wobei den Kondensatoren 32a, 32b jeweils einer der Halbleiterschalter 34a, 34b zugeordnet ist. Die Halbleiterschalter 34a, 34b sind gemeinsam von dem Pulsphasenmodulator 36 angesteuert, und werden somit im Wesentlichen zeitgleich geschaltet. Die Anschlüsse der Transmitterspule 30 sind weiterhin an eine dem Schwingkreis 28 parallel geschaltete Brückenschaltung 38 angeschlossen.

Die Brückenschaltung 38 ist als eine H-Brückenschaltung mit zwei Brückenzweigen 40 mit jeweils zwei Halbleiterschaltern 42a, 42b, 42c, 42d ausgeführt. Die Halbleiterschalter 42a, 42b, 42c, 42d sind hierbei pulsweitenmoduliert angesteuert. Die Brückenzweige 40 sind jeweils einerseits mit einem Potentialanschluss 44 an eine Versorgungsspannung angeschlossen. Andererseits sind die Brückenzweige 40 mit einem zweiten Potentialanschluss 46 an ein Erdpotential kontaktiert. Über die Halbleiterschalter 42a, 42b, 42c, 42d ist das jeweilige Spulenende der Transmitterspule 30 entweder mit der Versorgungsspannung oder mit dem Erdpotential verbindbar. Wird beispielsweise der Halbleiterschalter 42a geschlossen (leitend) und der Halbleiterschalter 42b geöffnet (nichtleitend), so ist das mit dem Kondensator 32a gekoppelte Spulenende mit dem Potential der Versorgungsspannung verbunden. Entsprechend ist bei einem Öffnen des Halbleiterschalters 42b und einem Schließen des Halbleiterschalters 42a die Transmitterspule 30 mit dem Erdpotential kontaktiert.

Die Brückenschaltung 38 ist dazu vorgesehen und eingerichtet im Betrieb des Transmitters 22 Verlustenergie (aufgrund von parasitären Verlusten oder abgestrahlter Leistung) in den Schwingkreis 28 einzuspeisen, um eine konstante Amplitude im Schwingkreis 28 - und somit eine konstante Amplitude des Sendesignals 26 - zu erhalten.

Mittels der Halbleiterschalter 34a, 34b wird der Schwingkreis 28 gestartet und angehalten oder gestoppt. Hierbei ist eine möglichst genaue Ausschaltzeit der Halbleiterschalter 34a, 34b kritisch für den Betrieb der Transmitterschaltung 24. Geeigneterweise werden die Halbleiterschalter 34a, 34b geöffnet, wenn die gesamte Energie des Schwingkreises 28 in den Kondensatoren 32a, 32b gespeichert ist, und sich keine Restenergie in der Transmitterspule 30 befindet. Dadurch wird sichergestellt, dass die Transmitterschaltung 24 mit einem möglichst maximalen Wirkungsgrad betrieben wird, da eine Restenergie in der Transmitterspule 30 beim Öffnen der Halbleiterschalter 34a, 34b verloren gehen würde. Somit werden somit Spannungsspitzen an der Transmitterspule 30 (Selbstinduktion) vermieden, welche zu unerwünschten Übertragungen oder sogar zur Zerstörung der Transmitterschaltung 24 führen könnten. Aufgrund eventueller Asymmetrien in der Transmitterschaltung 24 oder aufgrund eines verstimmten Schwingkreises 28 können diese Effekte jedoch nicht vollständig vermieden werden. Daher wird die Transmitterspule 30 kurzgeschlossen, wenn die Halbleiterschalter 34a, 34b geöffnet sind, um die in der Transmitterspule 30 verbleibende Energie kurzzuschließen. Das Kurzschließen erfolgt entweder durch einen separaten Schalter oder durch eine entsprechende Ansteuerung der Brückenschaltung 38, beispielsweise mittels einer Aktivierung der Halbleiterschalter 42b und 42d, wenn die Halbleiterschalter 34a und 34b geöffnet sind.

Vorzugsweise werden die Betriebs- oder Schaltzustände der Brückenschaltung 38 und des Pulsphasenmodulators 36 von einem gemeinsamen Takt- oder Zeitgeber abgeleitet. Dadurch ist ein synchronisiertes Schalten der Halbleiterschalter 34a, 34b, 42a, 42b, 42c, 42d sichergestellt. Somit werden korrekte Schaltzeitpunkte gewährleistet, so dass der Schwingkreis 28 bei einer gewünschten Sendefrequenz f0 in Resonanz arbeiten kann, ohne dass eine Stellspannung in den Kondensatoren 32a, 32b oder ein Spulenstrom Is in der Transmitterspule 30 überwacht werden muss. Dadurch entfallen zusätzliche Strom- und/oder Spannungsmesser, wodurch ein einfacher, kostengünstiger und bauraumkompakter Aufbau der Transmitterschaltung 24 gewährleistet ist.

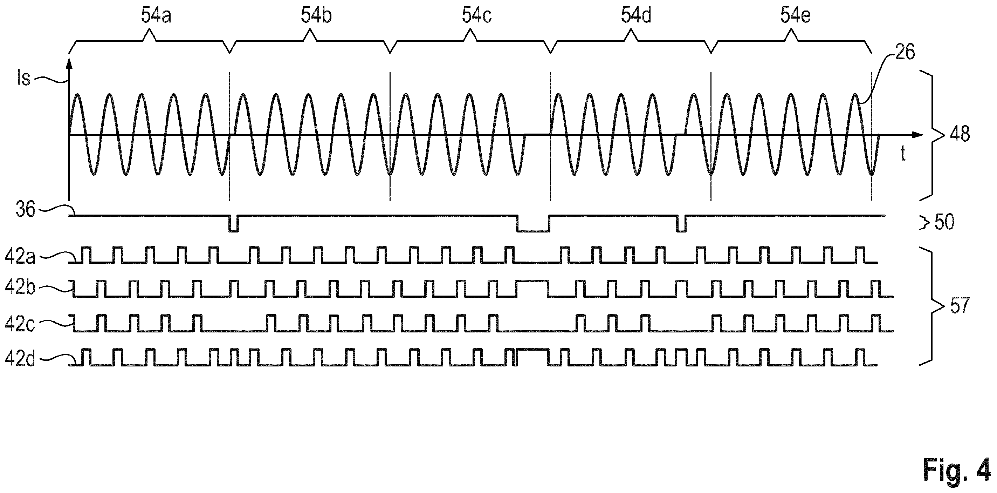

Das Diagramm der Fig. 4 umfasst drei vertikal, übereinander angeordnete Abschnitte 48, 50, 52.

In dem Abschnitt 48 ist ein schematisches Zeit-Spulenstrom-Diagramm gezeigt, wobei horizontal, also entlang der Abszissenachse (X-Achse), die Zeit t, und entlang der vertikalen Ordinatenachse (Y-Achse) der Spulenstrom Is der Transmitterspule 30 aufgetragen ist.

Der Abschnitt 50 zeigt den Verlauf eines Steuersignals des Pulsphasenmodulators 36 für die Halbleiterschalter 34a, 34b, wobei der Abschnitt 52 die Steuersignale für die Halbleiterschalter 42a, 42b, 42c, 42d zeigt. Ein hoher Signalpegel der Steuersignale schließt den jeweiligen Halbleiterschalter 34a, 34b, 42a, 42b, 42c, 42d, also schaltet ihn leitend, wobei ein niedriger Signalpegel des Steuersignals entsprechend den jeweiligen Halbleiterschalter 34a, 34b, 42a, 42b, 42c, 42d öffnet, also ihn nichtleitend schaltet. Hierbei werden die Halbleiterschalter 42a und 42c geöffnet und die Halbleiterschalter 42b und 42d geschlossen, während die Halbleiterschalter 34a, 34b geöffnet sind, um die Transmitterspule 30 kurzzuschließen.

Der Abschnitt 48 zeigt schematisch eine erfindungsgemäße Modulation des Sendesignals 26. Das Sendesignal 26 ist hierbei als ein Sinussignal gezeigt. Der Abschnitt 48 zeigt fünf Transmittermuster (TX-Sample) 54a, 54b, 54c, 54d, 54e zur Realisierung unterschiedlicher Modulationsphasen. Beispielsweise sind hierbei fünf Sinuswellen je Transmittermuster 54a, 54b,54c, 54d, 54e vorgesehen, wobei bei positiven Phasenverschiebungen (gegen den Uhrzeigersinn drehend) eine Sinuswelle weggelassen wird, was in diesen Fällen zu vier Sinuswellen führt.

Bei dem Transmittermuster 54a liegt eine Modulationsphase von 0° vor, wobei das Sendesignal 26 fünf Sinuswellen aufweist. In dem Transmittermuster 54b liegt eine Phasenverschiebung von -90° vor, wobei der Phasenmodulator 36 die Halbleiterschalter 34a, 34b öffnet, um den Schwingkreis 28 kurzzeitig anzuhalten oder zu pausieren, bis die gewünschte Phasenlage des Sinussignals vorliegt. Das anschließende Transmittermuster 54c weist ebenfalls eine Phasenverschiebung von -90° auf, wobei jedoch lediglich vier Sinuswellen mit einer Pause entsprechend einer +90° Phasenverschiebung vorgesehen sind, um in dem Transmittermuster 54d wieder eine Phasenlage oder Phasenverschiebung von 0° (bezogen auf das Transmittermuster 54a) zu realisieren. Während des Transmittermusters 54d wird der Schwingkreis 28 pausiert um für das Transmittermuster 54e eine Phasenverschiebung von +135° zu realisieren. Da beim Transmittermuster 54e die Phase +135° gesendet wird, ist es notwendig, dass die Sinusschwingung vor der eigentlichen Symbolgrenze gestartet wird um eine Phase von 135° zu erreichen. Das vierte Transmittermuster 54d weist hierbei lediglich vier Sinuswellen (Sinuswellen mit Phase 0°) auf.

Der Pulsphasenmodulator 36 weist den Nachteil auf, dass es kein kontinuierliches TX-Signal gibt, da es bei Phasenverschiebungen angehalten oder gestoppt werden muss. Dies verursacht Signalemissionen auch außerhalb eines gewünschten Frequenzbandes, welche typischerweise höher sind als bei einem kontinuierlichen Betrieb. Um diese unerwünschten Emissionen zu reduzieren, ist ein Schalt-Dithering vorgesehen.

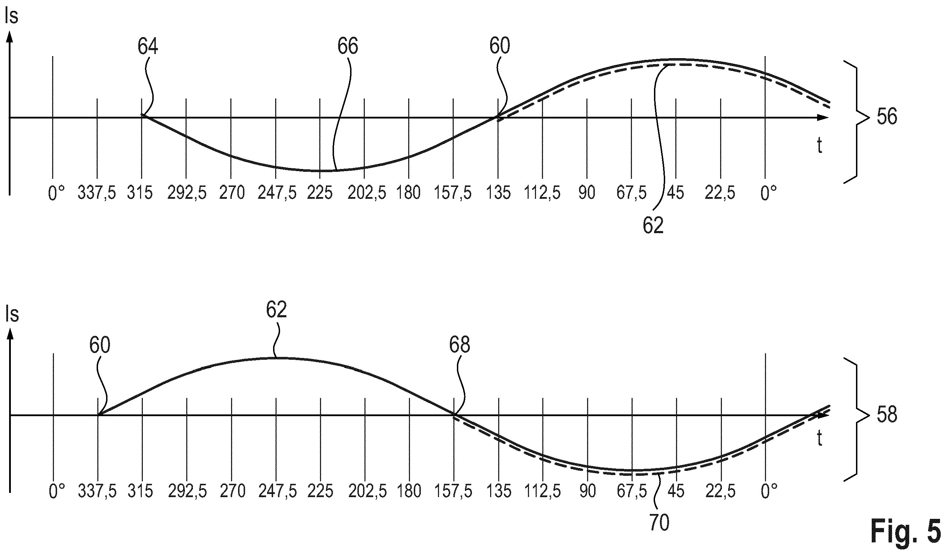

Nachfolgend ist anhand der Fig. 5 ein Schalt-Dithering des Pulsphasenmodulators 36 näher erläutert, bei welchem die Ansteuersignale für die Halbleiterschalter 34a, 34b mit einem Dither-Rauschen versehen sind.

Das Diagramm der Fig. 5 umfasst zwei vertikal, übereinander angeordnete Abschnitte 56, 58. Abschnitte 56, 58 zeigen jeweils ein schematisches Zeit-Spulenstrom-Diagramm, wobei horizontal, also entlang der Abszissenachse (X-Achse), die Zeit t, und entlang der vertikalen Ordinatenachse (Y-Achse) der Spulenstrom Is der Transmitterspule 30 aufgetragen ist. Die Zeitachse ist hierbei in Phasenlagen unterteilt.

Hierbei werden die Halbleiterschalter 34a, 34b geöffnet, wenn die Kondensatoren 32a, 32b ein positives oder negatives Spannungsmaximum erreichen, was zwei Schaltvorgänge während einer Sinuswelle bei 0° und 180° entspricht. In dem differenziellen Aufbau der Transmitterschaltung 24 wird die Ladung hierbei zwischen den zwei Kondensatoren getauscht. Unter einer Schaltposition bei 0° ist hier und im Folgenden insbesondere der Zustand zu verstehen, wenn der Kondensator 32a maximale Spannung hat (die komplette Ladung) und der andere Kondensator 32b keine Spannung. Der andere Schaltzeitpunt bei 180° ist entsprechen entgegengesetzt, wenn der Kondensator 32b maximale Spannung hat und der Kondensator 32a keine Spannung.

Insgesamt sind somit drei verschiedene Positionen zum Neustart des Schwingkreises 28 für eine vorgegebene TX-Phase möglich.

Zum einen ein Start bei einer gewünschten TX-Phase mit positiver Halbwelle. Dieser Zeitpunkt ist in der Fig. 4 mit dem Bezugszeichen 60 versehen. In dem Abschnitt 56 entspricht der Zeitpunkt 60 einer TX-Phase von 135°, wobei in dem Abschnitt 58 eine TX-Phase von 337,5° gewählt ist. Der resultierende Signalverlauf ist in den Figuren mit dem Bezugszeichen 62 versehen.

Als zweite Startposition ist ein Start mit einer Halbwelle früher als zum Zeitpunkt 60, also ein Start mit negativer Halbwelle aber 180° früheren Phasenlage, möglich. Diese Variante ist im Abschnitt 56 gezeigt, bei welcher der Schwingkreis 28 zu einem früheren Zeitpunkt 62 gestartet wird, so dass sich ein Signalverlauf 66 ergibt. Ab dem Zeitpunkt 60 weisen die Signalverläufe 62 und 66 den gleichen zeitlichen Verlauf auf.

Als dritte Startposition ist ein Start mit einer Halbwelle später als zum Zeitpunkt 60, also ein Start mit negativer Halbwelle aber 180° späterer Phasenlage, möglich. Diese Variante ist im Abschnitt 58 gezeigt, bei welcher der Schwingkreis 28 zu einem späteren Zeitpunkt 68 gestartet wird, so dass sich ein Signalverlauf 70 ergibt. Ab dem Zeitpunkt 68 weisen die Signalverläufe 62 und 66 den gleichen zeitlichen Verlauf auf. Geeigneterweise wird der Ausschaltzeitpunkt entsprechend der geplanten Startposition gewählt. Für einen Start mit positiver Halbwelle 0° ist es notwendig, dass der Schwingkreis 28 vorher so angehalten wird, dass alle Ladung in einem der Kondensatoren 32a, 32b, zum Beispiel in dem Kondensator 32a, gespeichert ist. Für einen Start mit negativer Halbwelle 180° ist es entsprechend notwendig, dass der Schwingkreis 28 so angehalten wird, dass die Ladung in dem jeweils anderen Kondensator, also zum Beispiel dem Kondensator 32b, gespeichert ist, damit der Spulenstrom Is mit negativer Halbwelle starten kann.

Vorzugsweise wird zufällig zwischen diesen drei Start- oder Schaltpositionen gewechselt, wodurch unerwünschte Übertragungen deutlich reduziert und die Länge der übertragenen Phasen entzerrt werden. Dieses Dithering oder Dither-Rauschen ist beispielsweise durch folgenden Pseudocode realisierbar:

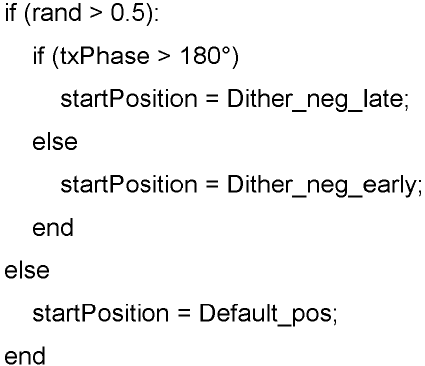

Hierbei ist rand eine Zufallszahl zwischen Null (0) und Eins (1), wobei txPhase die Transceiverphase in einem Bereich zwischen 0° und 360° ist. Die Schaltposition ist mit startPosition bezeichnet, wobei die Startposition ohne Verzögerung mit positiver Halbwelle als Default_pos, und die Startposition mit 180° früherer negativer Halbwelle als Dither_neg_early, und die Startposition mit 180° späterer negativer Halbwelle als Dither_neg_late bezeichnet sind.

Zusätzlich oder alternativ zu dem Schalt-Dithering ist beispielsweise auch ein Phasenpolaritäts-Dithering denkbar. Hierbei werden die Ausschaltperioden verkürzt, indem der Schwingkreis 28 mit 0° oder 180° Phasenversatz neu gestartet wird. Bevorzugterweise wird der Schwingkreis mit 0° oder 180° gestartet, unabhängig davon, ob er vorher bei 0° oder 180° angehalten wurde. Das Polaritäts-Dithering unterscheidet sich somit zum vorstehend beschriebenen Ausführungsbeispiel insbesondere dahingehend, dass das vorstehend beschriebenen Ausführungsbeispiel bei 0° ausgeschaltet werden muss, um auch bei 0° wieder eingeschaltet werden zu können. Bei dieser Verfeinerung durch eine zusätzliche H-Brücke, kann bei 180° ausgeschaltet werden aber bei 0° wieder eingeschaltet (und umgekehrt), was die Ausschaltperioden verkürzt. Des Weiteren werden Spektrumsemissionen reduziert und die übertragene Energie erhöht. Hierbei ermöglicht die zusätzliche H-Brücke, welche zwischen die Kondensatoren 32a, 32b und die Transmitterspule 30 geschaltet ist, eine Umdrehung oder Invertierung der Polarität des Spulenstroms Is, was einen Neustart des Schwingkreises 28 mit umgekehrter Polarität, also einem Phasenversatz von 180°, ermöglicht. Dadurch reduziert sich die maximal mögliche Lücke oder Pause des angehaltenen Schwingkreises 28 von einer vollen Sinuswelle auf bis zu einer halben Sinuswelle.

Ein weiterer Aspekt des vorgestellten Pulsphasenmodulators 36 ist die Möglichkeit, eine 1-Bit-Amplitudensteuerung zu realisieren. Hierbei wird der Schwingkreis 28 beispielsweise nicht lediglich angehalten, bis die gewünschte TX-Phase erreicht ist, sondern auch für einen längeren Zeitraum, der eine "Sende"-Amplitude des Sendesignals 26 von Null ermöglicht. Dadurch kann das Sendespektrum weiter verbessert werden. Des Weiteren wird auch die Leistung des gesamten Kommunikationssystems des Hörgeräts 2 verbessert, z. B. bei Verwendung von PSK-Sendern (PSK: Phase Shif Keying, Phasenumtastung).

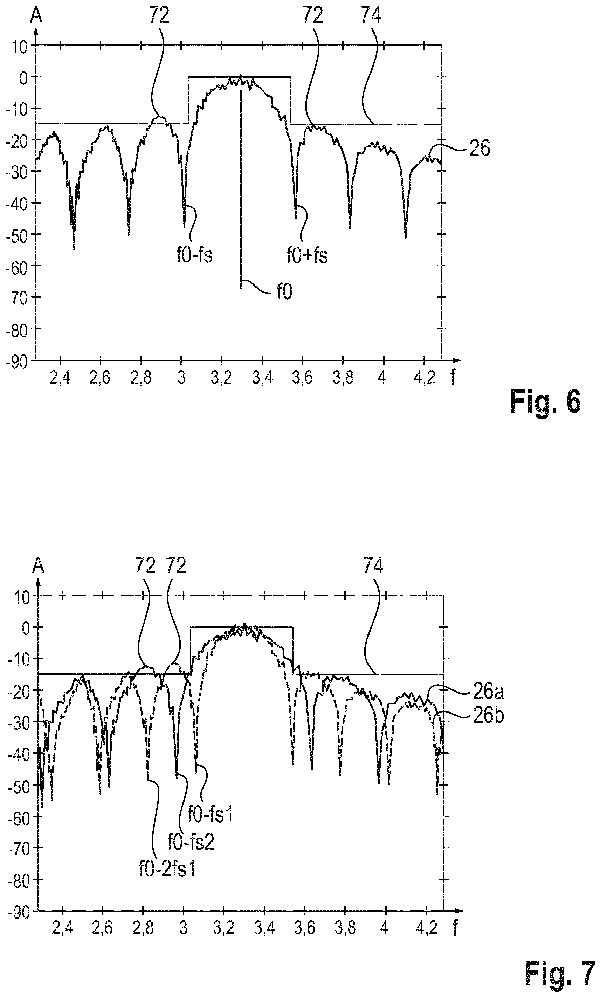

Nachfolgend ist anhand der Figuren 6 bis 8 eine Reduzierung von Störemissionen des Sendesignals 26 durch eine Überlagerung mehrerer Symbolraten näher erläutert.

Die Figuren 6 bis 8 zeigen jeweils ein Frequenz-Amplituden-Diagramm für ein fouriertransformiertes Sendesignal 26. Hierbei ist horizontal, also entlang der Abszissenachse (X-Achse), eine Frequenz f in Megahertz (MHz), und entlang der vertikalen Ordinatenachse (Y-Achse) eine normalisierte Amplitude A einer Fast Fourier Transformation (FFT) in Dezibel (dB) aufgetragen.

Der Pulsphasenmodulator 36 erzeugt im Betrieb relativ hohe Nebenkeulen 72 erster Ordnung bei f0 ± 1,5 fs, wobei f0 die Träger- oder Sendefrequenz und fs die Symbolrate der Modulation ist. Wenn die Symbolrate fs sehr hoch gewählt wird, um die Datenrate der Funkstrecke zu erhöhen, kann es vorkommen, dass die Nebenkeulen 72 nicht mehr innerhalb einer zulässigen gesetzlichen Bandbreitengrenzen liegen, und daher auf einen Signalpegel gedämpft werden müssen, welcher durch eine Emissionsmaske 74 vorgegeben ist.

Die Fig. 6 zeigt ein Beispiel für die Verletzung der Emissionsmaske 74 gemäß der europäischen Norm ETSI EN 300 330 V2.1.1. Die erlaubte Modulation muss hierbei innerhalb der Bandbreite ± 7,5% × f0 liegen, der Störemissionspegel links und rechts davon muss hierbei um etwa 15 dB gedämpft werden.

Zur Reduzierung dieser Störemissionen ist es vorgesehen, dass die Symbolrate fs des Sendesignals 26 zwischen mindestens zwei Symbolratewerten fs1, fs2 umgeschaltet wird. Mit anderen Worten ist die Symbolrate fs des Sendesignals 26 nicht konstant, sondern wechselt zwischen zwei oder mehr Symbolraten fs1, fs2 hin und her. Dadurch ergeben sich effektiv zwei Sendesignale 26a, 26b. In der Fig. 7 ist die Symbolrate fs1 geringfügig kleiner als die Symbolrate fs, wobei die Symbolrate fs2 geringfügig größer als die Symbolrate fs ist. Vorzugsweise unterscheiden sich die Symbolraten fs1, fs2 von der Sendefrequenz f0 hierbei um 20% oder weniger. In dem Ausführungsbeispiel ist die Sendefrequenz bei etwa 3.28 MHz (Megahertz), wobei die Symbolrate fs etwa 281 kHz (Kilohertz), die Symbolrate fs1 etwa 234 kHz, und die Symbolrate fs2 etwa 328 kHz ist. Die Symbolrate fs1 ist somit etwa 17% größer als fs, wobei die Symbolrate fs2 entsprechend etwa 17% kleiner als fs ist.

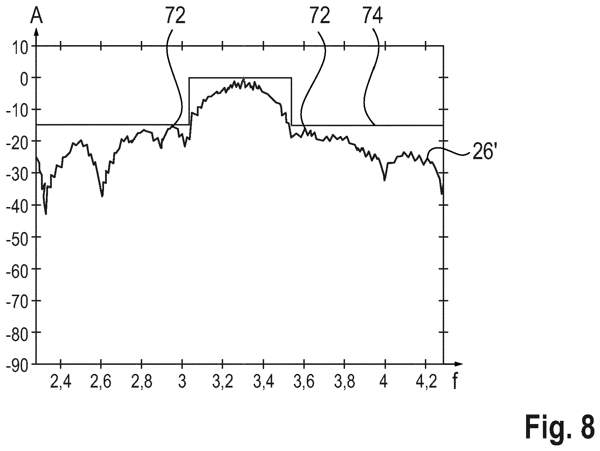

Bei einem häufigen oder schnellen Umschalten der Symbolraten fs1, fs2 verschmieren die Emissionsspektren 26a, 26b zu einem kombinierten Spektrum 26', welches nicht mehr gegen die vorgeschriebene Emissionsmaske 74 verstößt. Die Fig. 8 zeigt das resultierende Spektrum oder Sendesignal 26', welches sich aus der Überlagerung der verschiedenen Symbolraten fs1, fs2 beziehungsweise Sendesignale 26a, 26b ergibt. Durch die Überlagerung der unterschiedlichen Symbolraten fs1, fs2 werden die Nebenkeulen 72 unterdrückt. Die Umschalt- oder Wechselfolge zwischen den Symbolraten f1, f2 ist hierbei für die Signalverbindung 6 oder e2e-Kommunikation sowohl auf der Sender- als auch auf der Empfängerseite hinterlegt.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den Ausführungsbeispielen beschriebenen Einzelmerkmale auch auf andere Weise miteinander kombinierbar, ohne den Gegenstand der Erfindung zu verlassen.

### Bezugszeichenliste

- 2: Hörgerät
- 4a, 4b: Einzelgerät
- 6: Signalverbindung
- 8: Gerätegehäuse
- 10: Eingangswandler
- 12: Leitungen
- 14: Signalverarbeitungseinrichtung
- 16: Leitung
- 18: Hörer
- 20: Batterie
- 22: Transmitter
- 24: Transmitterschaltung
- 26, 26a, 26b, 26': Sendesignal
- 28: Schwingkreis
- 30: Transmitterspule
- 32, 32a, 32b: Kondensator
- 34, 34a, 34b: Halbleiterschalter
- 36: Pulsphasenmodulator
- 38: Brückenschaltung
- 40: Brückenzweig
- 42a, 42b, 42c, 42d: Halbleiterschalter
- 44, 46: Potentialanschluss
- 48, 50, 52: Abschnitt
- 54a, 54b, 54c, 54d, 54e: Transmittermuster
- 56, 58: Abschnitt
- 60: Zeitpunkt
- 62: Signalverlauf
- 64: Zeitpunkt
- 66: Signalverlauf
- 68: Zeitpunkt
- 70: Signalverlauf
- 72: Nebenkeule
- 74: Emissionsmaske

- f0: Sendefrequenz
- Is: Spulenstrom
- t: Zeit
- f: Frequenz
- fs, fs1, fs2: Symbolrate

## Patentansprüche

1. Hörgerät (2), insbesondere Hörhilfevorrichtung, aufweisend eine Transmitterschaltung (24) zur drahtlosen Signalübertragung, welche ein Sendesignal (26, 26a, 26b, 26') erzeugt,
- wobei die Transmitterschaltung (24) einen elektrischen Schwingkreis (28), einen Einspeiseschaltkreis zur Einspeisung von Verlustenergie in den Schwingkreis (28), und einen Pulsphasenmodulator (36) zur Pulsphasenmodulation des Sendesignals (26, 26a, 26b, 26') aufweist,
- wobei der Schwingkreis zwei Kondensatoren (32a, 32b) und zwei steuerbare Halbleiterschalter (34a, 34b) aufweist, wobei eine Transmitterspule (30) zwischen jeweils ersten Anschlüssen der Kondensatoren verschaltet ist, wobei jeweils ein Halbleiterschalter einem Kondensator zugeordnet ist und mit jeweils einem zweiten Anschluss eines jeweiligen Kondensators verbunden ist, und wobei die Kondensatoren mittels der Halbleiterschalter jeweils gegen Masse geschaltet sind,
- wobei der Einspeiseschaltkreis als eine dem Schwingkreis (28) parallel geschaltete Brückenschaltung (38) ausgeführt ist, wobei die Transmitterspule (30) zwischen zwei Brückenzweigen (40) der Brückenschaltung (38) verschaltet ist,
- wobei die Halbleiterschalter (34a, 34b) gemeinsam von dem Pulsphasenmodulator (36) angesteuert werden.

2. Hörgerät (2) nach Anspruch 1,
**dadurch gekennzeichnet,**
**dass** der Pulsphasenmodulator (36) und die Brückenschaltung (38) anhand eines gemeinsamen Zeitgebers gesteuert sind.

3. Hörgerät (2) nach Anspruch 1 oder 2, wobei das Hörgerät (2) binaural ausgebildet ist und hierzu zwei Einzelgeräte (4a, 4b) aufweist, wobei jedes der Einzelgeräte (4a, 4b) die Transmitterschaltung (28) aufweist, und wobei die Einzelgeräte (4a, 4b) über die zwei Transmitterschaltungen (28) signaltechnisch gekoppelt oder koppelbar sind.

4. Verfahren zum Betrieb eines Hörgeräts (2) nach einem der Ansprüche 1 bis 3,
- wobei zur drahtlosen Signalübertragung ein Sendesignal (26, 26a, 26b, 26') mit einer Sendefrequenz (f0) von der Transmitterschaltung (28) erzeugt wird,
- wobei von dem Einspeiseschaltkreis Verlustenergie in den Schwingkreis (28) eingespeist wird, um eine konstante Amplitude des Sendesignals (26, 26a, 26b, 26') zu erzeugen,
- wobei die Phase des Sendesignals (26, 26a, 26b, 26') moduliert wird indem der Schwingkreis (28) für eine Zeitdauer pausiert wird, indem zu einem ersten Zeitpunkt die Transmitterspule (30) mittels der Halbleiterschalter (34a, 34b) von jedem Kondensator (32a, 32b) getrennt wird, und die Transmitterspule (30) zu einem späteren zweiten Zeitpunkt (60, 64, 68) mittels der Halbleiterschalter (34a, 34b) mit jedem Kondensator (32a, 32b) wieder verbunden wird, wenn eine gewünschte Phasenlage des Schwingkreises (28) bezüglich der Sendefrequenz (f0) erreicht ist.

5. Verfahren nach Anspruch 4,
**dadurch gekennzeichnet,**
**dass** die Transmitterspule (30) von jedem Kondensator (32a, 32b) getrennt wird, wenn jeder Kondensator (32a, 32b) im Wesentlichen vollständig aufgeladen ist.

6. Verfahren nach Anspruch 4 oder 5,
**dadurch gekennzeichnet,**
**dass** die Transmitterspule (30) kurzgeschlossen wird, wenn die Transmitterspule (30) von jedem Kondensator (32a, 32b) getrennt wird.

7. Verfahren nach einem der Ansprüche 4 bis 6,
**dadurch gekennzeichnet,**
**dass** jeder Halbleiterschalter (34a, 34b) mit einem Steuersignal des Phasenmodulators (36) angesteuert wird, wobei das Steuersignal ein Dither-Rauschen aufweist.

8. Verfahren nach einem der Ansprüche 4 bis 7,
**dadurch gekennzeichnet,**
**dass** eine Symbolrate (fs1, fs2) des Sendesignals (26') zwischen mindestens zwei Symbolratewerten umgeschaltet wird.

## Claims

1. A hearing aid (2), in particular a hearing aid device, comprising a transmitter circuit (24) for wireless signal transmission, which generates a transmission signal (26, 26a, 26b, 26'),
- wherein the transmitter circuit (24) comprises an electrical resonant circuit (28), a supply circuit for feeding lost energy into the resonant circuit (28), and a pulse phase modulator (26) for pulse phase modulation of the transmission signal (26, 26a, 26b, 26'),
- wherein the resonant circuit comprises two capacitors (32a, 32b) and two controllable semiconductor switches (34a, 34b), wherein one transmitter coil (30) is interconnected between first connections of the capacitors in each case, wherein one semiconductor switch is assigned to each capacitor and is connected in each case to a second connection of a respective capacitor, and wherein the capacitors are each connected to ground by means of the semiconductor switches,
- wherein the supply circuit is designed as a bridge circuit (38) connected in parallel to the resonant circuit (28), wherein the transmitter coil (30) is interconnected between two bridge branches (40) of the bridge circuit (38),
- wherein the semiconductor switches (34a, 34b) are jointly actuated by the pulse phase modulator (36).

2. The hearing aid (2) as claimed in claim 1, **characterized in that**
the pulse phase modulator (36) and the bridge circuit (38) are controlled on the basis of a common time generator.

3. The hearing aid (2) as claimed in claim 1 or 2, wherein the hearing aid (2) is designed as binaural and comprises two individual devices (4a, 4b) for this purpose, wherein each of the individual devices (4a, 4b) comprises a transmitter circuit (28), and wherein the individual devices (4a, 4b) are coupled or can be coupled for signaling via the two transmitter circuits (28).

4. A method for operating a hearing aid (2) as claimed in any one of claims 1 to 3,
- wherein for wireless signal transmission, a transmission signal (26, 26a, 26b, 26') is generated at a transmission frequency (f0) by the transmitter circuit (28),
- wherein lost energy is fed by the supply circuit into the resonant circuit (28) in order to generate a constant amplitude of the transmission signal (26, 26a, 26b, 26'),
- wherein the phase of the transmission signal (26, 26a, 26b, 26') is modulated in that the resonant circuit (28) is caused for a duration in that at a first time, the transmitter coil (30) is disconnected by means of the semiconductor switches (34a, 34b) from each capacitor (32a, 32b), and the transmitter coil (30) is reconnected at a later second time (60, 64, 68) by means of the semiconductor switches (34a, 34b) to each capacitor (32a, 32b) when a desired phasing of the resonant circuit (28) with respect to the transmission frequency (f0) is reached.

5. The method as claimed in claim 4, **characterized in that** the transmitter coil (30) is disconnected from each capacitor (32a, 32b) when each capacitor (32a, 32b) is essentially completely charged.

6. The method as claimed in claim 4 or 5, **characterized in that**
the transmitter coil (30) is short-circuited when the transmitter coil (30) is disconnected from each capacitor (32a, 32b).

7. The method as claimed in any one of claims 4 to 6,
**characterized in that**
each semiconductor switch (34a, 34b) is actuated using a control signal of the phase modulator (36), wherein the control signal has a dithering noise.

8. The method as claimed in any one of claims 4 to 7,
**characterized in that**
a symbol rate (fs1, fs2) of the transmission signal (26') is switched between at least two symbol rate values.

## Revendications

1. Appareil auditif (2), notamment dispositif d'aide auditive, possédant un circuit émetteur (24) destiné à la transmission de signaux sans fil, lequel génère un signal d'émission (26, 26a, 26b, 26'),
- le circuit émetteur (24) possédant un circuit résonnant (28), un circuit d'injection destiné à injecter de l'énergie perdue dans le circuit résonnant (28) et un modulateur de phase d'impulsions (36) destiné à la modulation de phase d'impulsions du signal d'émission (26, 26a, 26b, 26'),
- le circuit résonnant possédant deux condensateurs (32a, 32b) et deux commutateurs à semiconducteur (34a, 34b) commandables, une bobine émettrice (30) étant connectée entre les premières bornes respectives des condensateurs, un commutateur à semiconducteur étant respectivement associé à un condensateur et étant respectivement connecté à une deuxième borne d'un condensateur respectif, et les condensateurs étant respectivement reliés à la masse au moyen des commutateurs à semiconducteur,
- le circuit d'injection étant réalisé sous la forme d'un circuit en pont (38) monté en parallèle avec le circuit résonnant (28), la bobine émettrice (30) étant montée entre deux branches de pont (40) du circuit en pont (38),
- les commutateurs à semiconducteur (34a, 34b) étant commandés conjointement par le modulateur de phase d'impulsions (36).

2. Appareil auditif (2) selon la revendication 1, **caractérisé en ce**
**que** le modulateur de phase d'impulsions (36) et le circuit en pont (38) sont commandés à l'aide d'un générateur de rythme commun.

3. Appareil auditif (2) selon la revendication 1 ou 2, l'appareil auditif (2) étant de configuration binaurale et possédant à cet effet deux appareils individuels (4a, 4b), chacun des appareils individuels (4a, 4b) possédant le circuit émetteur (28) et les appareils individuels (4a, 4b) étant couplés ou pouvant être couplés signalétiquement par le biais des deux circuits émetteurs (28).

4. Procédé pour faire fonctionner un appareil auditif (2) selon l'une des revendications 1 à 3,
- un signal d'émission (26, 26a, 26b, 26') ayant une fréquence d'émission (f0) étant généré par le circuit émetteur (28) pour la transmission de signaux sans fil,
- l'énergie perdue étant injectée dans le circuit résonnant (28) par le circuit d'injection afin de générer une amplitude constante du signal d'émission (26, 26a, 26b, 26'),
- la phase du signal d'émission (26, 26a, 26b, 26') étant modulée en mettant le circuit résonnant (28) en pause pendant un certain temps, en déconnectant la bobine émettrice (30) de chaque condensateur (32a, 32b) au moyen des commutateurs à semiconducteur (34a, 34b) à un premier instant, et en connectant à nouveau la bobine émettrice (30) à chaque condensateur (32a, 32b) à un deuxième instant (60, 64, 68) ultérieur au moyen des commutateurs à semiconducteur (34a, 34b) lorsqu'une phase souhaitée du circuit résonnant (28) par rapport à la fréquence d'émission (f0) est atteinte.

5. Procédé selon la revendication 4,
**caractérisé en ce**
**que** la bobine d'émission (30) est déconnectée de chaque condensateur (32a, 32b) lorsque chaque condensateur (32a, 32b) est sensiblement complètement chargé.

6. Procédé selon la revendication 4 ou 5,
**caractérisé en ce**
**que** la bobine émettrice (30) est court-circuitée lorsque la bobine émettrice (30) est déconnectée de chaque condensateur (32a, 32b).

7. Procédé selon l'une des revendications 4 à 6, **caractérisé en ce que** chaque commutateur à semiconducteur (34a, 34b) est commandé par un signal de commande du modulateur de phase (36), le signal de commande présentant un bruit de tramage.

8. Procédé selon l'une des revendications 4 à 7, **caractérisé en ce**
**qu'**un débit de symboles (fs1, fs2) du signal d'émission (26') est permuté entre au moins deux valeurs de débit de symboles.
